# EUROPEAN PATENT APPLICATION

(11) **EP 2 908 544 A1**
(43) Date of publication of application: **19.08.2015**
(21) Application number: 13846098.5
(22) Date of filing: 10.10.2013
(51) Int. Cl.: H04N 21/482

(54) **ELECTRONIC PROGRAMMING GUIDE DISPLAY DEVICE AND TELEVISION RECEIVER**

(30) Priority: 10.10.2012 JP 2012225209
(71) Applicant: Sharp Kabushiki Kaisha, Osaka-shi, Osaka 545-8522 (JP)
(72) Inventor: KAKAMI, Masayasu, Osaka 545-8522 (JP); HIRAI, Kenichi, Osaka 545-8522 (JP)
(74) Representative: Müller Hoffmann & Partner
(86) International application number: PCT/JP2013/077622
(87) International publication number: WO 2014/058022

(57) **Abstract**

An electronic program guide display device includes: a scrolling processing section (12) having a low-speed scrolling mode and a high-speed scrolling mode; and a display control section (3) which causes a display section to display a date group, made up of a plurality of dates included in an electronic program guide, during the high-speed scrolling mode.

## Description

### Technical Field

The present invention relates to (i) a device which displays information, particularly, an electronic program guide display device which displays an electronic program guide and (ii) a television receiver including such an electronic program guide display device.

### Background Art

Conventionally, in digital broadcasting among television broadcasting, not only a program but also program guide information is transmitted. A display device displays an electronic program guide (EPG: Electronic Programming Guide) with the use of this program guide information. The electronic program guide is displayed such that, for example, a plurality of pieces of program guide information are arranged in a matrix manner where a vertical axis serves as a time axis and a horizontal axis serves as a channel number axis.

A display device is suggested which is configured such that, in a case where (i) a program is searched with the use of such an electronic program guide and (ii) a date and time switching button is, for example, pressed down while the electronic program guide is being displayed, the electronic program guide is switched to a calendar screen, on which date and time ranges of the electronic program guide to be displayed can be specified, and the date and the time ranges of the electronic program guide to be displayed is specified (for example, Non-Patent Literature 1).

### Citation List

### Non-Patent Literature 1

"Instruction Manual for Blu-ray Disc Recorder, 2. Operation", [online], 2012, Sharp Corporation, [searched on October 9, 2012], The Internet <http://www.sharp.co.jp/support/av/dvd/doc/bdt510-2100_ope.pdf>

### Summary of Invention

### Technical Problem

However, electronic program guide display devices of these days display, together with a body of an electronic program guide (a cell group made up of program cells corresponding to respective programs), (i) program information on a program which corresponds to a cell currently selected or (ii) a date of an electronic program guide currently displayed. In a case where it is intended to display information, such as program information, together with the body of the electronic program guide, a region which can be used to display the body of the electronic program guide is reduced in size and, accordingly, such a problem arises that a visibility of the body of the electronic program guide is reduced.

The present invention has been made in view of the above problem, and an object of the present invention is to realize an electronic program guide display device capable of displaying information, such as program information, together with a body of an electronic program guide without unnecessarily reducing the body of the electronic program guide in size.

### Solution to Problem

In order to attain the above object, an electronic program guide display device in accordance with an aspect of the present invention is an electronic program guide display device which displays a part of an electronic program guide on a display section as a display target section, the electronic program guide including programs to be broadcasted on a plurality of dates, the electronic program guide display device including: a scrolling section having (i) a low-speed scrolling mode in which the scrolling section changes the display target section by scrolling the electronic program guide in a direction of a time axis at a first speed and (ii) a high-speed scrolling mode in which the scrolling section changes the display target section by scrolling the electronic program guide at a second speed higher than the first speed; and a display control section which causes the display section to display a date group made up of the plurality of dates, while the scrolling section is scrolling the electronic program guide in the high-speed scrolling mode.

### Advantageous Effects of Invention

According to an aspect of the present invention, an electronic program guide display device is capable of displaying information, such as program information, together with a body of an electronic program guide (a cell group made up of program cells corresponding to respective programs) without unnecessarily reducing the body of the electronic program guide in size.

### Brief Description of Drawings

Fig. 1 is a block diagram illustrating a configuration of a main part of a television in accordance with an embodiment of the present invention.
Fig. 2 is a view illustrating an example screen on which an electronic program guide is displayed.
Fig. 3 is a view illustrating an example screen on which the electronic program guide is displayed and which is observed while a scrolling button is being pressed down.
Fig. 4 is a view illustrating another example screen on which an electronic program guide is displayed and which is observed while a scrolling button is being pressed down.

### Description of Embodiments

The following description will discuss, in detail, an embodiment of the present invention. A television receiver (hereinafter, referred to as a television) in accordance with the present embodiment generates an electronic program guide (EPG) with the use of received program information, and displays the electronic program guide.

### (Configuration of television)

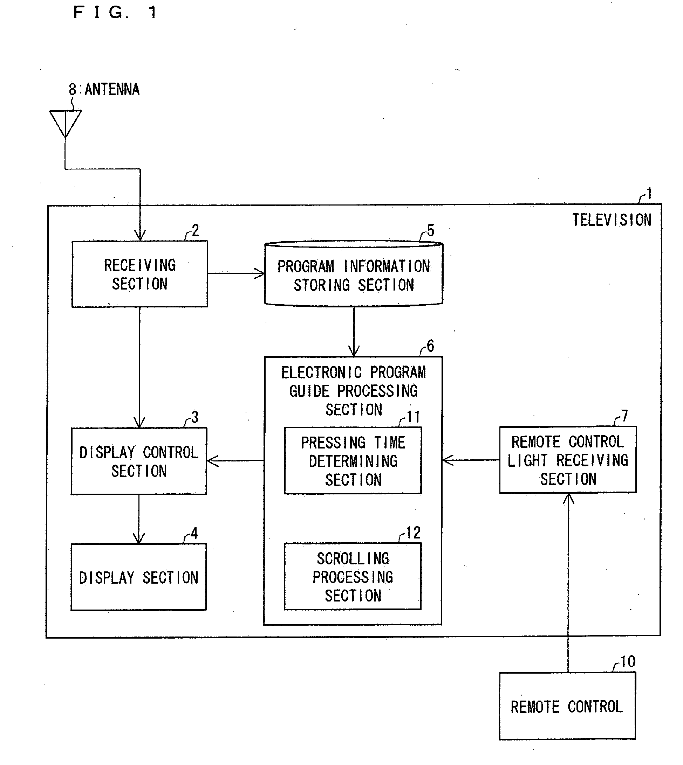

Fig. 1 is a block diagram illustrating a configuration of a main part of a television in accordance with the embodiment of the present invention. As illustrated in Fig. 1, the television 1 includes a receiving section 2, a display control section 3, a display section 4, a program information storing section 5, an electronic program guide processing section 6, and a remote control light receiving section 7. The electronic program guide processing section (scrolling section) 6 includes a pressing time determining section 11 and a scrolling processing section (scrolling section) 12. Note that, in the television 1, a function of receiving and displaying a television broadcast is carried out with the use of a publicly known technique and, therefore, a description of the function will be omitted.

An electronic program guide display device is made up of the display control section 3, the display section 4, the program information storing section 5, and the electronic program guide processing section 6, out of the above blocks included in the television 1.

The receiving section 2 receives a television broadcast and program information via an antenna 8. The receiving section 2 supplies, to the display control section 3, the television broadcast thus received. The receiving section 2 stores, in the program information storing section 5, the program information received.

The display control section 3 causes the display section 4 to display (i) a television broadcast obtained from the receiving section 2, (ii) an electronic program guide obtained from the electronic program guide processing section 6, and (iii) a result of processing carried out with respect to the electronic program guide.

The display section 4 is a display device which displays a television broadcast or an electronic program guide under the control of the display control section 3. Examples of the display section 4 encompass a liquid crystal display, an organic EL (Electro Luminescence) display, and a plasma display.

The program information storing section 5 stores therein program information which the receiving section 2 has received. Examples of contents of the program information encompass a title of a program, contents of the program, broadcasting time, a broadcasting station, a cast, and a category of the program.

The electronic program guide processing section 6 generates an electronic program guide with the use of program information stored in the program information storing section 5, and transmits the electronic program guide to the display control section 3. Examples of the electronic program guide encompass a program guide in which a plurality of pieces of program information are arranged in a matrix manner where a vertical axis serves as a time axis and a horizontal axis serves as a channel number axis. The electronic program guide is made up of a plurality of program cells. Further, the electronic program guide includes programs to be broadcasted on a plurality of dates.

The electronic program guide processing section 6 supplies, to the display control section 3, an instruction to cause the display section 4 to display, as a display target section, a part of an electronic program guide which includes programs to be broadcasted on a plurality of dates. Note that the part of the electronic program guide which part is displayed on the display section 4 is also referred to as a body of the electronic program guide (cell group made up of program cells corresponding to respective programs).

The electronic program guide processing section 6 includes the pressing time determining section 1 1 and the scrolling processing section 12. The electronic program guide processing section 6 processes an electronic program guide and transmits, to the display control section 3, a result of processing the electronic program guide, in response to a signal which is supplied from a remote control and which is received by the remote control light receiving section 7.

The pressing time determining section 11 determines, in accordance with a signal received by the remote control light receiving section 7, whether or not a given button provided on a remote control 10, specifically, a scrolling button which causes an electronic program guide to be scrolled is pressed down for a predetermined time or more. In a case where the pressing time determining section 11 determines that the button is pressed down for the predetermined time or more, the pressing time determining section 11 notifies the scrolling processing section 12 of the fact that the button is pressed down for the predetermined time or more.

In a case where the scrolling processing section 12 obtains, from the pressing time determining section 11, a notification that the button, which causes an electronic program guide to be scrolled, is pressed down for the predetermined time or more, the scrolling processing section 12 scrolls the electronic program guide in a low-speed scrolling mode or a high-speed scrolling mode. Specifically, in a case where the button, which causes an electronic program guide to be scrolled, is pressed down for the predetermined time or more, the scrolling processing section 12 sets a scrolling mode of the electronic program guide to the low-speed scrolling mode. Then, in a case where a cursor shown in the electronic program guide is moved in a direction of the time axis by an amount corresponding to, for example, three hours, the scrolling processing section 12 sets the scrolling mode of the electronic program guide to the high-speed scrolling mode.

The scrolling processing section 12 then scrolls the electronic program guide in the low-speed scrolling mode or the high-speed scrolling mode.

Note here that the low-speed scrolling mode is a mode in which the scrolling processing section 12 changes a display target section of an electronic program guide by scrolling the electronic program guide at a low speed (first speed). Specifically, the low-speed scrolling mode is a mode in which the scrolling processing section 12 scrolls the electronic program guide by an amount corresponding to one program. The high-speed scrolling mode is a mode in which the scrolling processing section 12 changes the display target section of the electronic program guide by scrolling the electronic program guide at a speed higher than that in the low-speed scrolling mode. For example, the high-speed scrolling mode is a mode in which the scrolling processing section 12 scrolls the electronic program guide by, not an amount corresponding to one program, but an amount corresponding to a given range of programs.

The remote control light receiving section 7 receives a signal from the remote control 10, and transmits contents of the signal to the electronic program guide processing section 6.

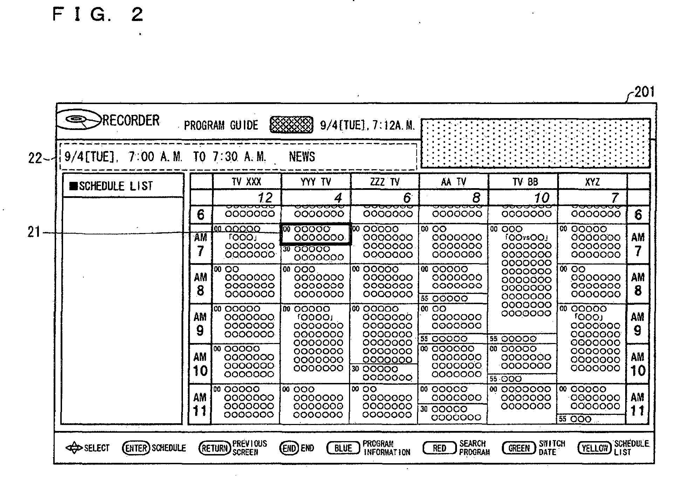

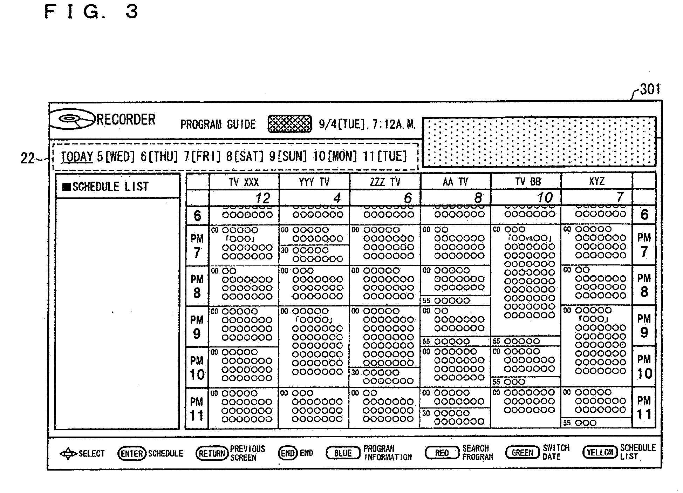

Next, an example screen on which an electronic program guide is displayed will be described, in detail, with reference to Figs. 2 and 3. Figs. 2 and 3 are views each illustrating an example screen on which an electronic program guide is displayed.

As in an example display screen 201 illustrated in Fig. 2, a body of the electronic program guide (a display target section of the electronic program guide) is displayed on a screen of the display section 4. In a lower part of the screen, actions which correspond to respective buttons provided on the remote control 10 are displayed. In the center of an upper part of the screen, a current time is displayed. In a shaded part and a dotted part in the upper part of the screen, an advertisement and the like which the television 1 has received are, for example, displayed. Note that, in the present embodiment, such a display screen illustrated in Fig. 2 is a mere example. A layout on the display screen is not limited to such.

In a case where the body of the electronic program guide is first displayed, a program cell, corresponding to a program which is being broadcasted at the current time and which is selected, is highlighted as in the example display screen 201 illustrated in Fig. 2. In the example display screen 201, a program cell, corresponding to a program which is being broadcasted from 7 a.m. on Channel 4, that is, which is being broadcasted at the current time of 7:12 a.m., is highlighted. That is, a cursor 21 is located at the program cell corresponding to the program which is being broadcasted from 7 a.m. on Channel 4.

Program information on the program which is indicated by the program cell highlighted by the cursor 21 is displayed in a region 22 on the screen. In Fig. 2, as the program information, a broadcasting date, a broadcasting time, and a title of the program are displayed. The number of characters displayed in the program cell constituting the electronic program guide varies depending on a size of the program cell. Therefore, for example, in a case where the program cell is small in size or the title of the program is long, it is not possible to display the whole of the title of the program in the program cell. Accordingly, by displaying the title of the program in a region outside the program cell as illustrated in Fig. 2, it is possible to cause a user to recognize the title of the program which the cursor 21 indicates.

In a case where the electronic program guide processing section 6 receives a signal, indicating that the scrolling button is pressed down, in a state illustrated in Fig. 2, the cursor 21 is moved to another program cell which is adjacent, in the direction of the time axis, to the program cell. Then, in a case where the scrolling button is pressed down for the predetermined time or more, the scrolling processing section 12 scrolls the electronic program guide in the low-speed scrolling mode.

Thereafter, in a case where (i) the scrolling button continues to be pressed down and (ii) the cursor 21 is then moved in the direction of the time axis by, for example, an amount corresponding to three hours, the scrolling processing section 12 scrolls the electronic program guide in the high-speed scrolling mode (high-speed scrolling).

Fig. 3 illustrates the screen observed while the electronic program guide is being scrolled at a high speed from a state illustrated in Fig. 2. As in an example display screen 301, a date group which is made up of a plurality of dates included in the electronic program guide is displayed in the region 22 on the screen, instead of the program information (see Fig. 3). Further, out of the plurality of dates, a date (today in Fig. 3) of the display target section (a period between 6 p.m. and 11 p.m. in Fig. 3) of the electronic program guide is underlined. Note that how to display the date of the display target section of the electronic program guide is not limited to such. It is only necessary to display the date, which corresponds to the display target section among the date group, in a style different from those of the other dates. For example, the date can be displayed in boldface.

In a case here the user stops pressing down the scrolling button, that is, the electronic program guide processing section 6 ceases to receive the signal indicating that the scrolling button is pressed down, the scrolling processing section 12 stops scrolling the electronic program guide at the high speed. After scrolling of the electronic program guide is stopped, the display control section 3 then causes the display section 4 to display, in the region 22, program information corresponding to a program cell which is one of program cells included in the electronic program guide and which is selected by the user, that is, a program cell which is indicated by the program cell that is indicated by the cursor 21, instead of the date group, as illustrated in Fig. 2.

With this, it is possible to cause the user to (i) properly and easily recognize program information on a program which is currently highlighted, while an electronic program guide is being scrolled at a low speed, (ii) properly and easily recognize a date corresponding to a display target section, while the electronic program guide is being scrolled at a high speed, and (iii) properly and easily recognize program information on a program which is currently highlighted, while high-speed scrolling of the electronic program guide is stopped. Therefore, the television 1 is capable of displaying information, such as program information, together with a body of the electronic program guide without unnecessarily reducing a size of a region in which the electronic program guide is displayed.

### [Variation]

The foregoing embodiment has discussed an example in which the date, corresponding to the display target section of the electronic program guide shown in the example display screen 301, is displayed in the region 22 on the screen in a style different from those of the other dates, while the electronic program guide is being scrolled at the high speed. However, the present invention is not limited to such an example.

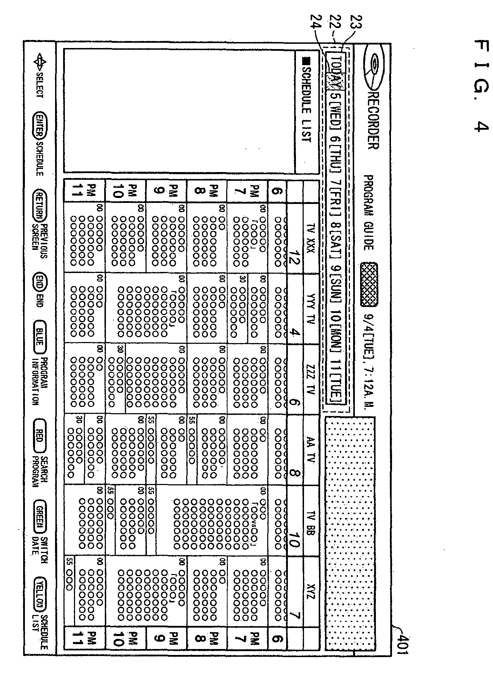

Fig. 4 illustrates another example screen observed while an electronic program guide is being scrolled at a high speed from the state illustrated in Fig. 2. As in an example display screen 401, a slide bar 23 is displayed in a region 22 on a screen (see Fig. 4). The slide bar 23 is arranged such that a bar-shaped region is defined into a plurality of blocks and a plurality of dates, included in the electronic program guide, are assigned to the respective blocks. In the slide bar 23, scrolling information 24 indicative of a display target section (a period between 6 p.m. and 11 p.m. in Fig. 4) displayed on the screen is displayed at a position in the slide bar 23 which position corresponds to the display target section.

Such a television 1 more suitably allows a user to properly and easily recognize a date corresponding to a display target section of an electronic program guide. Therefore, an electronic program guide display device is capable of more suitably displaying information, such as program information, together with the display target section of the electronic program guide without unnecessarily reducing a size of a region in which the electronic program guide is displayed.

### [Summary 1]

An electronic program guide display device in accordance with an aspect of the present invention is an electronic program guide display device that displays a part of an electronic program guide on a display section as a display target section, which electronic program guide includes programs to be broadcasted on a plurality of dates and in which electronic program guide one axis serves as a time axis and the other axis serves as a channel number axis, the electronic program guide display device including: a scrolling section (scrolling processing section 12) having (i) a low-speed scrolling mode in which the scrolling section changes the display target section by scrolling the electronic program guide in a direction of the time axis at a first speed (low speed) and (ii) a high-speed scrolling mode in which the scrolling section changes the display target section by scrolling the electronic program guide at a second speed (high speed) higher than the first speed; and a display control section (display control section 3) which causes the display section to display (a) program information on a program indicated by a selected one of a plurality of program cells constituting the electronic program guide, while the scrolling section is scrolling the electronic program guide in the low-speed scrolling mode and (b) a date group made up of the plurality of dates, instead of the program information, while the scrolling section is scrolling the electronic program guide in the high-speed scrolling mode.

According to the above configuration, the electronic program guide display device displays, on the display section, program information on a program indicated by a selected program cell, while an electronic program guide is being scrolled at the low speed, whereas the electronic program guide display device displays, on the display section, a date group included in the electronic program guide, while the electronic program guide is being scrolled at the high speed.

With this configuration, the electronic program guide display device is capable of displaying information, such as program information, together with a display target section of an electronic program guide without unnecessarily reducing a size of a region in which the electronic program guide is displayed.

The electronic program guide display device in accordance with an aspect of the present invention is preferably arranged such that the display control section causes the display section to display program information on a program indicated by a selected one of a plurality of program cells constituting the electronic program guide, after the scrolling section stops scrolling the electronic program guide in the high-speed scrolling mode.

According to the above configuration, the electronic program guide display device displays, on the display section, program information on a program indicated by a selected program cell, while high-speed scrolling of an electronic program guide is being stopped. With this configuration, the electronic program guide display device more suitably allows a user to properly and easily recognize program information on a program indicated by a selected program cell. Furthermore, the electronic program guide display device is capable of more suitably displaying information, such as program information, together with a display target section of an electronic program guide without unnecessarily reducing a size of a region in which the electronic program guide is displayed.

Further, the electronic program guide display device in accordance with an aspect of the present invention is preferably arranged such that the display control section causes the display section to display one of the plurality of dates constituting the date group, which one corresponds to the target display section, in a style different from those of the other of the plurality of dates.

According to the above configuration, the electronic program guide display device allows a user to properly and easily recognize a date corresponding to a display target section of an electronic program guide. Therefore, the electronic program guide display device is capable of more suitably displaying information, such as program information, together with the display target section of the electronic program guide without unnecessarily reducing a size of a region in which the electronic program guide is displayed.

Further, the electronic program guide display device in accordance with an aspect of the present invention can be arranged such that: the display control section causes the display section to display a slide bar arranged such that a bar-shaped region is defined into a plurality of blocks and the plurality of dates included in the date group are assigned to the respective blocks; and the display control section causes the display section to display scrolling information, indicative of the display target section, at a position in the slide bar which position corresponds to the target display section, while the scrolling section is scrolling the electronic program guide in the high-speed scrolling mode.

According to the above configuration, the electronic program guide display device more suitably allows a user to properly and easily recognize a date corresponding to a display target section of an electronic program guide. Therefore, the electronic program guide display device is capable of more suitably displaying information, such as program information, together with the display target section of the electronic program guide without unnecessarily reducing a size of a region in which the electronic program guide is displayed.

A method of controlling an electronic program guide display device in accordance with an aspect of the present invention is a method of controlling an electronic program guide display device that displays a part of an electronic program guide on a display section as a display target section, which electronic program guide includes programs to be broadcasted on a plurality of dates and in which electronic program guide one axis serves as a time axis and the other axis serves as a channel number axis, the method including the steps of: (A) scrolling the electronic program guide in (i) a low-speed scrolling mode in which the display target section is changed by scrolling the electronic program guide in a direction of the time axis at a first speed or (ii) a high-speed scrolling mode in which the display target section is changed by scrolling the electronic program guide at a second speed higher than the first speed; and (B) controlling the display device to display (a) program information on a program indicated by a selected one of a plurality of program cells constituting the electronic program guide, while the electronic program guide is being scrolled in in the low-speed scrolling mode in the step (A) and (b) a date group made up of the plurality of dates, instead of the program information, while the electronic program guide is being scrolled in the high-speed scrolling mode in the step (A).

According to the above configuration, the method brings about an effect similar to that brought about by the electronic program guide display device in accordance with as aspect of the present invention.

The scope of the present invention also encompasses (i) a program for controlling the electronic program guide display device and a television receiver including the electronic program guide display device to operate and (ii) a recording medium in which the program is recorded.

### [Summary 2]

An electronic program guide display device in accordance with an aspect of the present invention can be expressed as below.

An electronic program guide display device in accordance with an aspect of the present invention is an electronic program guide display device which displays a part of an electronic program guide on a display section as a display target section, the electronic program guide including programs to be broadcasted on a plurality of dates, the electronic program guide display device including: a scrolling section (scrolling processing section 12) having (i) a low-speed scrolling mode in which the scrolling section changes the display target section by scrolling the electronic program guide in a direction of a time axis at a first speed (low speed) and (ii) a high-speed scrolling mode in which the scrolling section changes the display target section by scrolling the electronic program guide at a second speed (high speed) higher than the first speed; and a display control section (display control section 3) which causes the display section to display a date group made up of the plurality of dates, while the scrolling section is scrolling the electronic program guide in the high-speed scrolling mode.

According to the above configuration, the electronic program guide display device displays, on the display section, a date group included in an electronic program guide, while the electronic program guide is being scrolled at the high speed.

With this configuration, the electronic program guide display device is capable of displaying information, such as program information (date group), together with a display target section of an electronic program guide without unnecessarily reducing a size of a region in which the electronic program guide is displayed.

Furthermore, the electronic program guide display device in accordance with an aspect of the present invention is preferably arranged such that the display control section causes the display section to display, instead of the date group, program information on a program indicated by a selected one of a plurality of program cells constituting the electronic program guide, while the scrolling section is scrolling the electronic program guide in the low-speed scrolling mode.

According to the above configuration, the electronic program guide display device displays, on the display section, program information on a program indicated by a selected program cell, instead of a date group, while an electronic program guide is being scrolled at the low speed.

With this configuration, the electronic program guide display device is capable of displaying information, such as program information, together with a display target section of and electronic program guide without unnecessarily reducing a size of a region in which the electronic program guide is displayed.

### [Software Implementation Example]

Finally, each block of the television 1 can be implemented by hardware such as a logic circuit provided on an integrated circuit (IC chip) or can alternatively be implemented by software with the use of a CPU (Central Processing Unit).

In the latter case, the television 1 includes: a CPU which executes instructions of a program that carries out the foregoing functions; and a storage device (recording medium) such as a ROM (Read Only Memory) which stores the program, a RAM (Random Access Memory) in which the program is loaded, and a memory which stores the program and various sets of data. The object of the present invention can be attained by (i) supplying, to the television 1, the recoding medium in which program codes (an executable program, an intermediate code program, and a source program) of a program for controlling the television 1, which is implemented by software that executes the foregoing functions, are computer-readably recorded and (ii) causing a computer (or a CPU or an MPU) of the television 1 to read and execute the program codes recorded in the recording medium.

Examples of the recording medium includes non-transitory tangible mediums, for example, (i) tapes such as a magnetic tape and a cassette tape; (ii) disks including magnetic disks, such as a floppy (Registered Trademark) disk and a hard disk, and optical disks, such as a CD-ROM, an MO, an MD, a DVD, and a CD-R; (iii) cards such as an IC card (including a memory card) and an optical card; (iv) semiconductor memories such as a mask ROM, EPROM, EEPROM (Registered Trademark), and a flash ROM; and (v) logic circuits such as a PLD (Programmable Logic Device) and an FPGA (Field Programmable Gate Array).

The television 1 can be connected to a communication network so that the program codes are supplied to the television 1 via the communication network. This communication network is not limited to any particular one, provided that the program codes can be transmitted. Examples of the communication network include the Internet, an intranet, an extranet, a LAN, ISDN, a VAN, a CATV communications network, a virtual private network, a telephone network, a mobile telecommunications network, and a satellite communication network. Further, a transmission medium by which the communication network is constituted is not limited to any particular one, provided that the program codes can be transmitted. Examples of the transmission medium include: wired transmission media such as IEEE1394, a USB, a power-line carrier, a cable TV circuit, a telephone line, and ADSL (Asymmetric Digital Subscriber Line); and wireless transmission media such as infrared communication systems such as IrDA and a remote control, Bluetooth (Registered Trademark), IEEE802.11 wireless communication system, HDR (High Digital Rate), NFC (Near Field Communication), DLNA (Digital Living Network Alliance, registered trademark), a mobile phone network, a satellite circuit, and a digital terrestrial network. Note that the present invention can also be implemented in a form of a computer data signal in which the program codes are embodied by an electronic transmission and which is embedded in carrier waves.

The present invention is not limited to the description of the embodiments, but may be altered by a skilled person in the art within the scope of the claims. An embodiment derived from a proper combination of technical means disclosed in different embodiments is also encompassed in the technical scope of the present invention. Further, by a combination of technical means disclosed in different embodiments, a new technical feature can be derived.

### Industrial Applicability

The present invention is suitably employed for, for example, a digital broadcasting-enabled television which displays an electronic program guide.

### Reference Signs List

- 1: Television (television receiver)
- 2: Receiving section
- 3: Display control section (display control means)
- 4: Display section
- 5: Program information storing section
- 6: Electronic program guide processing section
- 7: Remote control light receiving section
- 8: Antenna
- 10: Remote Control
- 11: Pressing time determining section
- 12: Scrolling processing section (scrolling means)
- 21: Cursor
- 22: Region
- 23: Slide bar
- 24: Scrolling information

## Claims

1. An electronic program guide display device which displays a part of an electronic program guide on a display section as a display target section, the electronic program guide including programs to be broadcasted on a plurality of dates, the electronic program guide display device comprising:
a scrolling section having (i) a low-speed scrolling mode in which the scrolling section changes the display target section by scrolling the electronic program guide in a direction of a time axis at a first speed and (ii) a high-speed scrolling mode in which the scrolling section changes the display target section by scrolling the electronic program guide at a second speed higher than the first speed; and
a display control section which causes the display section to display a date group made up of the plurality of dates, while the scrolling section is scrolling the electronic program guide in the high-speed scrolling mode.

2. The electronic program guide display device as set forth in claim 1, wherein the display control section causes the display section to display, instead of the date group, program information on a program indicated by a selected one of a plurality of program cells constituting the electronic program guide, while the scrolling section is scrolling the electronic program guide in the low-speed scrolling mode.

3. The electronic program guide display device as set forth in claim 1 or 2, wherein the display control section causes the display section to display program information on a program indicated by a selected one of a plurality of program cells constituting the electronic program guide, after the scrolling section stops scrolling the electronic program guide in the high-speed scrolling mode.

4. The electronic program guide display device as set forth in any one of claims 1 through 3, wherein the display control section causes the display section to display one of the plurality of dates constituting the date group, which one corresponds to the target display section, in a style different from those of the other of the plurality of dates.

5. The electronic program guide display device as set forth in any one of claims 1 through 3, wherein:
the display control section causes the display section to display a slide bar arranged such that a bar-shaped region is defined into a plurality of blocks and the plurality of dates included in the date group are assigned to the respective blocks; and
the display control section causes the display section to display scrolling information, indicative of the display target section, at a position in the slide bar which position corresponds to the target display section, while the scrolling section is scrolling the electronic program guide in the high-speed scrolling mode.

6. A television receiver comprising an electronic program guide display device recited in any one of claims 1 through 5.
